(19) Europäisches Patentamt
European Patent Office
Office européen des brevets

(11) **EP 3 382 910 B1**

(12) **EUROPEAN PATENT SPECIFICATION**

(45) Date of publication and mention
of the grant of the patent:
**09.09.2020 Bulletin 2020/37**

(51) Int Cl.:
*H04B 10/40* (2013.01)       *H04B 10/61* (2013.01)
*H04B 10/64* (2013.01)

(21) Application number: **17164195.4**

(22) Date of filing: **31.03.2017**

(54) **OPTICAL TRANSCEIVER AND METHOD OF OPERATING AN OPTICAL TRANSCEIVER**

OPTISCHER SENDE-EMPFÄNGER UND VERFAHREN FÜR DEN BETRIEB EINES OPTISCHEN SENDE-EMPFÄNGERS

ÉMETTEUR-RÉCEPTEUR OPTIQUE ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.10.2018 Bulletin 2018/40**

(73) Proprietor: **Nokia Solutions and Networks Oy 02610 Espoo (FI)**

(72) Inventors:
• **Rios Müller, Rafael**
  **91620 Nozay (FR)**
• **Charlet, Gabriel**
  **91620 Nozay (FR)**

(74) Representative: **DREISS Patentanwälte PartG mbB**
  **Friedrichstraße 6**
  **70174 Stuttgart (DE)**

(56) References cited:
**US-B1- 7 209 664**

• **ANTONIO MECOZZI; CRISTIAN ANTONELLI; MARK SHTAIF: "Kramers-Kronig coherent receiver", OPTICA, vol. 3.11, 2016, pages 1220-1227, XP002773963,**

## Description

## Field of the invention

The disclosure relates to an optical transceiver and to a method of operating an optical transceiver.

The disclosure further relates to an optical transmission system and to a method of operating an optical transmission system.

## Background

Conventional coherent optical communications systems provide for detecting a four-dimensional (4D) optical field thus enabling e.g. an electronic compensation of transmission impairments using signal processing. However, receivers in these conventional systems have a comparatively large number of complex and costly components such as photodiodes, high-bandwidth analog-to-digital converters (ADC), and dedicated lasers for providing a local oscillator signal.

US 7 209 664 B1 discloses a frequency-agile optical transceiver.

## Summary

Various embodiments provide an improved optical transceiver and an improved method of operating an optical transceiver, which do not suffer from one or more of the above-mentioned limitations and which enable to implement efficient optical transmission schemes.

Some embodiments feature an optical transceiver according to claim 1, comprising an optical transmitter having an optical modulator for modulating an optical carrier signal, a coherent optical receiver for demodulating data from a received data-modulated optical signal, and a laser source being connected to provide, at a first frequency, the optical carrier signal and an optical local oscillator signal, the coherent optical receiver being configured to demodulate data from said received data-modulated optical signal at a second carrier frequency, the second carrier frequency being shifted from said first frequency by a first frequency shift. Advantageously, this configuration requires only one laser source. I.e., according to some embodiments, it is sufficient to provide one single laser source within said transceiver, which may be shared between the transmitter portion (i.e., for an optical carrier) and the receiver portion (i.e., for a local oscillator) of said transceiver. Moreover, by using a coherent receiver being configured to demodulate data from said received data-modulated optical signal at a second carrier frequency, the second carrier frequency being shifted from said first frequency by a first frequency shift, at the same time, only a comparatively low number of other complex components is required, as compared to conventional coherent receivers, and efficient optical transmission schemes using two or more transceivers according to the embodiments may be provided.

In other words, according to some embodiments, said coherent receiver is configured to process modulated optical signals having a carrier frequency which is shifted with respect to said first frequency of said optical signal of said laser source by a first frequency shift, i.e. said modulated optical signals have been generated using said shifted carrier frequency.

A coherent receiver configured to process modulated optical signals having a carrier frequency which is shifted with respect to said first frequency of said optical signal of said laser source (and of said local oscillator signal) by said frequency shift may also be denoted as "Kramers-Kronig coherent receiver" as proposed by Antonio Mecozzi, Cristian Antonelli, and Mark Shtaif, "Kramers-Kronig coherent receiver.", Optica 3.11 (2016): 1220-1227, which is referred to as [reference 1]. This document is also available on the Internet, cf. http://dx.doi.org/10.1364/OPTICA.3.001220.

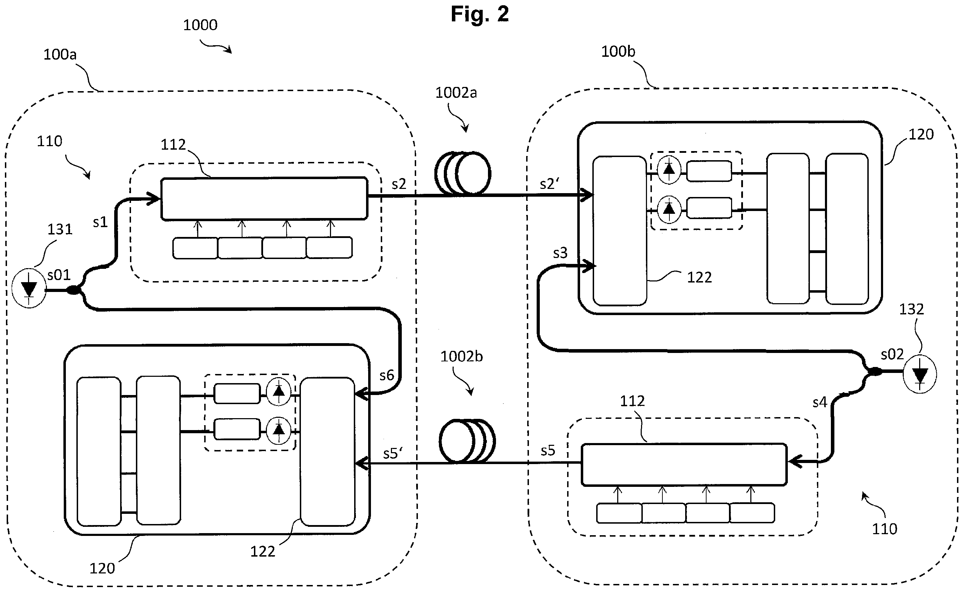

Particularly, a Kramers-Kronig (KK) processing scheme, which may form part of one or more embodiments of the disclosure, is disclosed in chapter 3. and Fig. 2 of [reference 1]. For this purpose, the subject-matter of [reference 1] and especially chapter 3. and Fig. 2 of [reference 1] are included in the present disclosure. Especially, Fig. 2b of [reference 1] discloses a KK scheme according to which a local oscillator signal ("LO") is added to a received information carrying signal (e.g., modulated signal) at the receiver using a frequency-selective coupler to avoid signal and LO loss. More specifically, said LO is added at a left edge of the modulated signal. This implementation eliminates the need for an optical hybrid at the receiver, and requires the use of (only) a single photodiode. When compared to conventional balanced heterodyne, the KK scheme with the LO added at the receiver eliminates the need for balanced detection, whose implementation, especially at high baud rates, may become nontrivial.

According to an embodiment, an optical power splitter may be provided which is connected to receive light from said laser source and to produce said optical carrier signal on one optical output thereof and to produce said optical local oscillator signal on another output thereof. In other words, both said optical carrier signal and said local oscillator signal for said coherent optical receiver may be derived from said optical signal of said laser source using the optical power splitter. As an example, said optical power splitter enables to divide the signal of the laser source into e.g. two portions with a predetermined optical power ratio.

As mentioned above, said coherent optical receiver is configured to process modulated optical signals having a carrier frequency which is shifted with respect to said first frequency of said optical signal of said laser source (and thus also with respect to the frequency of its local oscillator signal, which is derived from said optical signal of the laser source) by a first frequency shift.

Advantageously, said first frequency shift is be greater than about 40 percent of a symbol rate of said modulated optical signals. This enables application of the Kramers-Kronig receiving scheme while only using one laser source within said transceiver.

According to further particularly preferred embodiments, said first frequency shift may range between about 50 percent of a symbol rate of said modulated optical signals and about 55 percent of said symbol rate of said modulated optical signals. This enables a particularly precise signal reconstruction while reducing the bandwidth of the components involved in processing the modulated optical signals within the coherent receiver.

According to a further embodiment, said coherent receiver comprises an input stage which is configured to receive said modulated optical signal and said local oscillator signal, and to add said local oscillator signal to said modulated optical signal. This enables further processing such as e.g. a frequency downconversion in the optical domain and further demodulation processing, e.g. by applying an ASSB (asynchronous single side band) converter scheme as explained further below.

According to a further embodiment, said coherent receiver is configured to convert two output signals of said input stage from the optical domain to the electrical domain, wherein two electrical output signals are obtained, and to perform an analog-to-digital conversion of said two electrical output signals to obtain two digital signals. According to a preferred embodiment, one photodiode and one ADC per output signal of said input stage may be provided for said conversion of said two electrical output signals to obtain said two digital signals. Thus, in contrast to conventional coherent optical receivers, a reduced number of complex components is required.

According to a further embodiment, said coherent receiver comprises a signal reconstruction stage configured to transform said two digital signals into output signals characterizing a phase and an amplitude of two polarizations of said modulated optical signal. This enables an efficient demodulation of e.g. DP (dual polarization)-QPSK (quadrature phase shift keying) signals characterized by said two digital signals.

According to a further embodiment, said optical modulator is a polarisation division multiplexing, PDM, I/Q modulator configured to provide a first and a second polarization, i.e. two orthogonal polarizations, of said optical carrier signal and to modulate phase and amplitude (or I/Q components, respectively) of said two orthogonal polarizations, whereby DP-QPSK modulated signals may be provided.

As an example, such PDM I/Q modulator may comprise at its input an optical splitter to provide two optical input signals, two IQ Mach-Zehnder-modulators for effecting IQ modulation to said two optical input signals, a polarization rotator to effect a change of polarization of an output signal of one of said two IQ Mach-Zehnder-modulators, e.g. from TE (transversal electric) state to TM (transversal magnetic) state, and a polarization beam combiner to combine the optical signals of different (TE, TM) polarization states, thus delivering e.g. a PDM I/Q modulated signal or DP-QPSK modulated signal, respectively.

According to a further embodiment, said first frequency is shifted from said second frequency by, at least, about half of a baud rate of said optical receiver. In other words, the first frequency shift corresponds to about half of a baud rate of said optical receiver.

According to a further embodiment, said first frequency is shifted from said second frequency by, at least, about half of a baud rate of said optical modulator.

Particularly, according to some embodiments, a symbol rate or baud rate, respectively, at the optical transmitter may be different from a symbol rate or baud rate, respectively, at the optical receiver.

Further embodiments feature a method of operating an optical transceiver according to claim 9.

According to an embodiment, said optical transceiver may use a first frequency which is shifted from said second frequency by, at least, about half of a baud rate of said optical receiver.

According to a further embodiment, said optical transceiver may use a first frequency which is shifted from said second frequency by, at least, about half of a baud rate of said optical modulator.

According to a further embodiment, said optical transceiver uses an optical power splitter which is connected to receive light from said laser source and to produce said optical carrier signal on one optical output thereof and to produce said optical local oscillator signal on another output thereof.

Further embodiments feature an optical transmission system comprising at least two optical transceivers according to the embodiments, wherein a laser source of a first one of said at least two transceivers is configured to provide a first, preferably continuous, optical signal at said first frequency, wherein a laser source of a second one of said at least two transceivers is configured to provide a second, preferably continuous, optical signal at a second frequency, which is shifted with respect to (e.g., different from) said first frequency by a non-vanishing second frequency shift. This enables to efficiently use Kramers-Kronig type coherent optical receivers with their advantages (reduced number of complex parts) in combination with respective transmitters that share a laser source, especially one single laser source, for generation of an optical carrier signal and a local oscillator signal.

As an example, the transmitter of the first transceiver may provide a first modulated (e.g., DP-QPSK modulated) optical output signal, which is transmitted to the receiver of the second transceiver via a first optical transmission channel such as e.g. an optical fiber. The receiver of the second transceiver may process said received signal according to the embodiments. Similarly, the transmitter of the second transceiver may provide a second modulated (e.g., DP-QPSK modulated) optical output signal, which is transmitted to the receiver of the first transceiver via a second optical transmission channel such as e.g. an optical fiber, and the receiver of the second transceiver may process said received signal according to the embodiments. This way, both transceivers use a single (shared) local laser source and provide for efficient processing of said modulated optical signals. This transmission scheme may also be denoted as "Kramers-Kronig receiver with shared carrier/local oscillator and duplex interleaving", as the carrier frequencies for both transmission directions are shifted by said second frequency shift. This principle may also be applied to WDM systems having a plurality of wavelength channels in each transmission direction.

According to an embodiment, said first transceiver is configured to provide said modulated optical output signal with a first symbol rate, wherein said second frequency shift ranges between about 40 percent of a symbol rate of said first modulated optical output signal and about 65 percent of said symbol rate of said first modulated optical output signal.

According to a further embodiment, said second transceiver is configured to provide said modulated optical output signal with a second symbol rate. According to an embodiment, said second symbol rate is equal to the first symbol rate. Other embodiments may also provide for different first and second symbol rates.

According to further embodiments, more than two transceivers may also be provided, wherein n many, n > 1, transceivers are provided at a first location, and n many further transceivers are provided at e.g. a second location which is remote from said first location, wherein optical transmission channels between respective transmitters and receivers are provided in form of one or more optical fibers. In these embodiments, the individual optical carrier signals provided by the laser source(s) of the transmitters may comprise a defined, preferably constant, carrier spacing or channel spacing, wherein the carriers for the first transmission direction are frequency-shifted with respect to the carriers of the second transmission direction by e.g. said above-explained second frequency shift each. This way, a WDM (wavelength division multiplexed) system, e.g. a point-to-point WDM system, may be provided, wherein e.g. n many transmission signals of a same transmission direction may be transmitted within a same optical fiber. Advantageously, each WDM carrier may be used to transmit e.g. a DP-QPSK modulated signal.

Further embodiments feature a method of operating an optical transmission system as defined by claim 13. Further advantageous embodiments of said method are provided by the dependent claims.

## Brief description of the figures

Further features, aspects and advantages of the illustrative embodiments are given in the following detailed description with reference to the drawings in which:

| Figure 1 | schematically depicts a block diagram of an optical transceiver according to an embodiment, |
|---|---|
| Figure 2 | schematically depicts a block diagram of an optical transmission system according to an embodiment, |
| Figure 3A | schematically depicts a spectrum of an optical signal according to an embodiment, |
| Figure 3B | schematically depicts a spectrum of an optical signal according to a further embodiment, |
| Figure 3C | schematically depicts frequency shifts according to some embodiments, |
| Figure 4 | schematically depicts a block diagram of an optical transmission system according to a further embodiment, |
| Figure 5 | schematically depicts spectra of optical signals of the optical transmission system according to Figure 4, |
| Figure 6A | schematically depicts a simplified flow-chart of a method of operating an optical transceiver according to an embodiment, |
| Figure 6B | schematically depicts a simplified flow-chart of a method of operating an optical transceiver according to a further embodiment, |
| Figure 7A | schematically depicts a simplified flow-chart of a method of operating an optical transmission system according to an embodiment, |
| Figure 7B | schematically depicts a simplified flow-chart of a method of operating an optical transmission system according to a further embodiment, |
| Figure 8 | schematically depicts details of a Kramers-Kronig coherent receiver according to an embodiment, |
| Figure 9A to 9E | schematically depict signal spectra according to further embodiments, and |
| Figure 10 | schematically depicts a simplified |

flow-chart according to a further embodiment.

**Description of the embodiments**

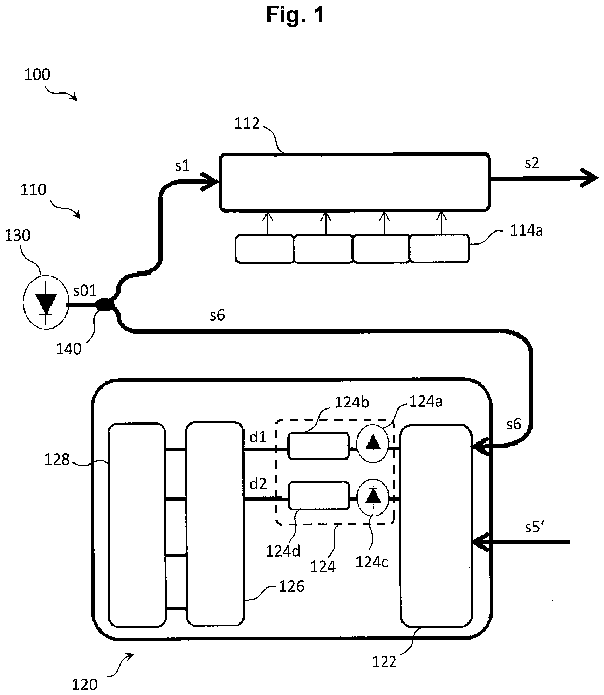

Figure 1 schematically depicts a block diagram of an optical transceiver 100 according to an embodiment. The optical transceiver 100 comprises an optical transmitter 110 with an optical modulator 112, preferably optical data modulator, for modulating an optical carrier signal s1 to obtain a data-modulated optical output signal s2, which may be transmitted via an optical transmission channel, e.g. including a series of one or more optical fibers (not shown in Fig. 1), to an optical receiver.

The optical transceiver 100 further comprises a coherent optical receiver 120, also denoted as "Kramers-Kronig coherent receiver" in the following, for demodulating data from a received data-modulated optical signal s5', which has a carrier frequency and/or bandwidth that may be close to the carrier frequency and/or bandwidth of the modulated optical output signal s2. The optical transceiver 100 further comprises a laser source 130, e.g. a conventional semiconductor laser, with or without an external cavity, that provides a continuous optical signal s01 at a first frequency. As an example, said first frequency may correspond with a wavelength within the optical C-band (1530 nm to 1565 nm) or optical L-band (1565 nm to 1625 nm). According to further embodiments, other frequencies (or wavelengths) are also possible for the continuous optical signal s01.

Advantageously, the optical transceiver 100 is configured to produce said optical carrier signal s1 for the optical modulator 112 and an optical local oscillator signal s6 for said Kramers-Kronig coherent receiver 120 from said optical signal s01 of said laser source 130. In particular, an optical power splitter 140 splits the signal s01 from the laser source 130, e.g. power splits the signal s01, to produce the signal s1 for the optical modulator 112 of the transmitter 110 and the signal s6 for the optical interface of the coherent receiver 120. In other words, the optical transceiver 100 comprises a single laser source 130, which is shared between the transmitter 110 and the receiver 120.

Further advantageously, the coherent receiver 120 is configured to process modulated optical signals s5' having a carrier frequency which is shifted with respect to said first frequency of said optical signal s01 of said laser source 130 (and thus also with respect to the frequency of its local oscillator signal s6) by a first frequency shift.

As already mentioned above, such coherent receiver may also be denoted as "Kramers-Kronig coherent receiver".

According to an embodiment, the modulator 112 provides polarisation division multiplexing, PDM, an includes, e.g., in-phase (I) and quadrature-phase (Q) modulators configured to provide separate I and Q modulations of each of the two orthogonal polarizations (i.e.,

TE and TM state) of said optical carrier signal s1. Such modulation can be phase modulation or phase and amplitude modulation of said two orthogonal polarizations, whereby DP-QPSK or DP-quadrature amplitude modulation (QAM) modulated signals may be provided. The respectively polarized signals may be combined by a polarization beam combiner (not shown) to combine the optical signals of said different modulated (TE, TM) polarization states, thus delivering e.g. said PDM and I/Q modulated signal, e.g., as a specific example a DP-QPSK modulated signal, respectively, which is denoted by reference sign s2 in Figure 1. According to an embodiment, electrical input signals to the PDM I/Q modulator 112 may be provided by DAC (digital-to-analog converter) or driver stages, only one of which is denoted in Fig. 1 with the reference sign 114a. A symbol rate used for said modulation may be denoted as "R".

According to a further embodiment, the Kramers-Kronig coherent receiver 120 of said optical transceiver 100 may be configured to receive and to process such PDM I/Q modulated signals, e.g., DP-QPSK or DP-QAM modulated signals, respectively, cf. reference sign s5'.

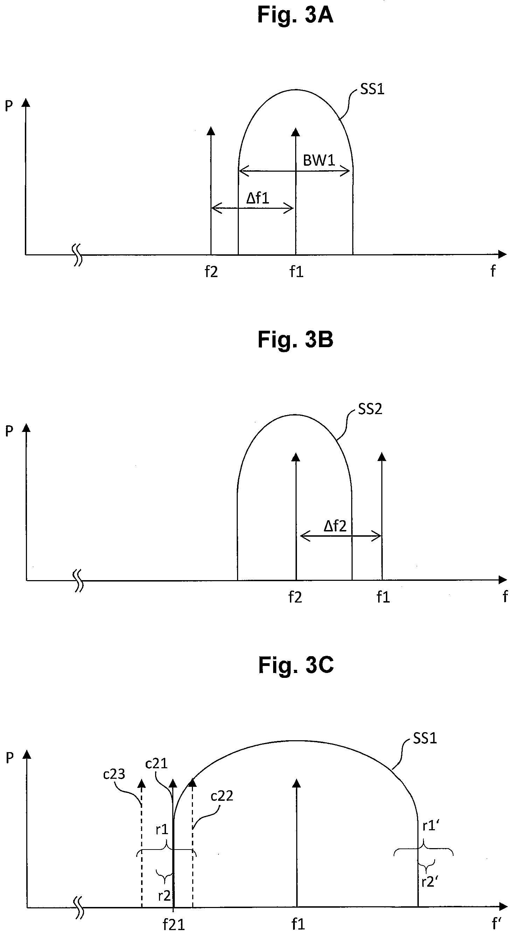

Figure 3A schematically depicts a spectrum SS1 of an optical signal having a bandwidth BW1 according to an embodiment. As an example, said optical signal may comprise a bandwidth BW1 of about 32 GHz (gigahertz), and said optical signal may comprise a symbol rate of about 32 Gbaud (gigabaud). Reference sign f1 indicates the spectral representation of the optical signal s01 (Fig. 1) of said laser source 130 or the optical carrier signal s1, whereas said spectrum SS1 (Fig. 3A) represents the modulated optical output signal s2 (Fig. 1). Reference sign f2 indicates the frequency-shifted carrier signal of said modulated optical signals s5' the Kramers-Kronig coherent receiver 120 according to the embodiments is configured to process, and said first frequency shift between said carrier signals f1, f2 is indicated by reference sign $\Delta f1$.

According to some embodiments, said first frequency shift $\Delta f1$ may be greater than about 40 percent of a symbol rate of said modulated optical signals s5' which ensures proper processing based on a Kramers-Kronig scheme. In the above example with a symbol rate of about 32 Gbaud, said first frequency shift $\Delta f1$ may be greater than about 12.6 GHz.

According to further embodiments, said first frequency shift $\Delta f1$ may be greater than about 45 percent of a symbol rate of said modulated optical signals s5'.

According to further embodiments, said first frequency shift $\Delta f1$ may be greater than about 49 percent of a symbol rate of said modulated optical signals s5'.

According to further embodiments, said first frequency shift $\Delta f1$ may range between about 40 percent of a symbol rate of said modulated optical signals s5' and about 65 percent of said symbol rate of said modulated optical signals s5'.

According to further embodiments, said first frequency shift Δf1 may range between about 45 percent of a symbol rate of said modulated optical signals s5' and about 60 percent of said symbol rate of said modulated optical signals s5'.

According to further preferred embodiments, said first frequency shift Δf1 may range between about 49 percent of a symbol rate of said modulated optical signals s5' and about 60 percent of said symbol rate of said modulated optical signals s5'. While this range enables almost perfect signal reconstruction within the coherent receiver 120, it may only require comparatively moderate processing bandwidths for components of the coherent receiver 120.

According to further particularly preferred embodiments, said first frequency shift Δf1 may range between about 50 percent of a symbol rate of said modulated optical signals s5' and about 55 percent of said symbol rate of said modulated optical signals s5'. While this range enables an even improved signal reconstruction within the coherent receiver 120, it may only require comparatively moderate processing bandwidths for components of the coherent receiver 120.

Figure 3C schematically depicts exemplary frequency shifts according to some embodiments and associated ranges. Note that a different scale of the frequency axis f' is used in Fig. 3C, as compared to Fig. 3A, for the sake of clarity. Fig. 3C also depicts the spectrum SS1 and its carrier frequency f1.

Reference sign r1 exemplarily depicts a first frequency range associated with said first frequency shift Δf1 as explained above with reference to Fig. 3A.

As already mentioned above, according to some embodiments, said first frequency shift Δf1 may range between about 40 percent of a symbol rate of said modulated optical signals s5' and about 65 percent of said symbol rate of said modulated optical signals s5', which corresponds with said first frequency range r1 of Fig. 3C. In other words, according to the present embodiments, said first frequency shift Δf1 may be chosen such that the frequency-shifted carrier signal f21 of said modulated optical signals s5' lies within the first frequency range r1.

Exemplary first carrier signal c21 depicts an embodiment wherein the first frequency shift Δf1 is chosen such that said carrier signal c21 is arranged substantially directly outside the bandwidth BW1 (Fig. 3A), i.e. in Fig. 3C outside a left (i.e. lower, on a frequency axis f') band edge of spectrum SS1.

Exemplary second carrier signal c22 depicts an embodiment wherein the first frequency shift Δf1 is chosen such that said second carrier signal c22 is arranged inside the bandwidth BW1 (Fig. 3A). While signal reconstruction may be inferior as compared to using said first carrier signal c21, the principle according to the embodiments may still be applied for this exemplary configuration.

Exemplary third carrier signal c23 depicts an embodiment wherein the first frequency shift Δf1 is chosen such that said third carrier signal c23 is arranged further outside the bandwidth BW1 (Fig. 3A) as compared to first carrier signal c21. This may account for non-zero roll-off factors of spectrum SS1, frequency uncertainties of the involved laser sources, and the like.

Reference sign r2 exemplarily depicts a second frequency range associated with said first frequency shift Δf1 as explained above with reference to Fig. 3A according to further embodiments. As can be seen, said second frequency range r2 is smaller than said first frequency range r1, but e.g. comprises said first carrier signal c21.

According to further embodiments, the values of the carrier frequencies and the first frequency shift Δf1 may also be chosen such that corresponding ranges r1', r2' for the first frequency shift Δf1 are provided at a right (i.e., upper) band edge of spectrum SS1.

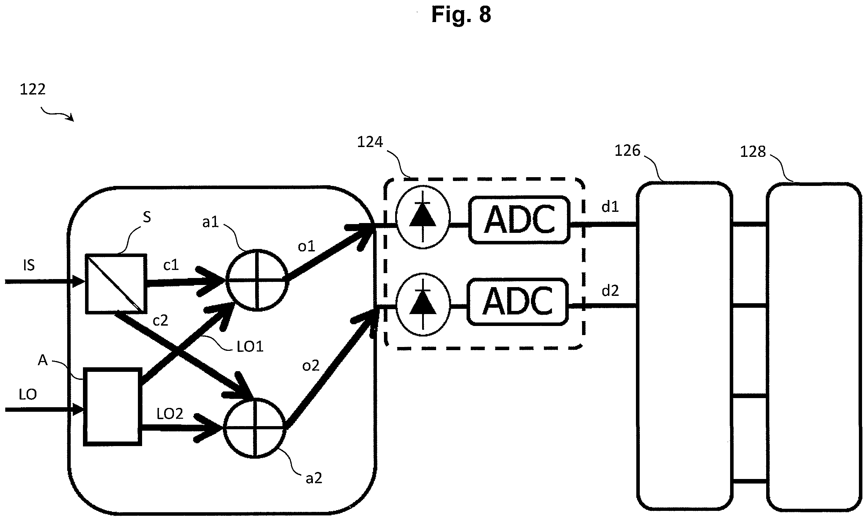

According to a further embodiment, said Kramers-Kronig coherent receiver 120 (Fig. 1) comprises an input stage 122 which is configured to receive said modulated optical signal s5' and said local oscillator signal s6, and to add said local oscillator signal s6 to the received modulated optical signal s5'. This enables a frequency downconversion and further processing of the modulated optical signal s5' within subsequent function blocks 124, 126 of the Kramers-Kronig coherent receiver 120, e.g. by applying an ASSB (asynchronous single side band) converter scheme as explained further below. Details of the input stage 122 and the further function blocks 124, 126 according to some embodiments are provided below with reference to Fig. 8 to 10.

Figure 8 schematically depicts details of a Kramers-Kronig coherent receiver according to an embodiment. The input stage 122 is configured to receive an optical input signal IS and an optical local oscillator signal LO. The optical input signal IS may e.g. comprise or represent a PDM I/Q modulated signal, e.g., a DP-QPSK or DP-QAM modulated signal, cf. reference sign s5' already mentioned above. The local oscillator signal LO may e.g. comprise said local oscillator signal s6 as also already mentioned above.

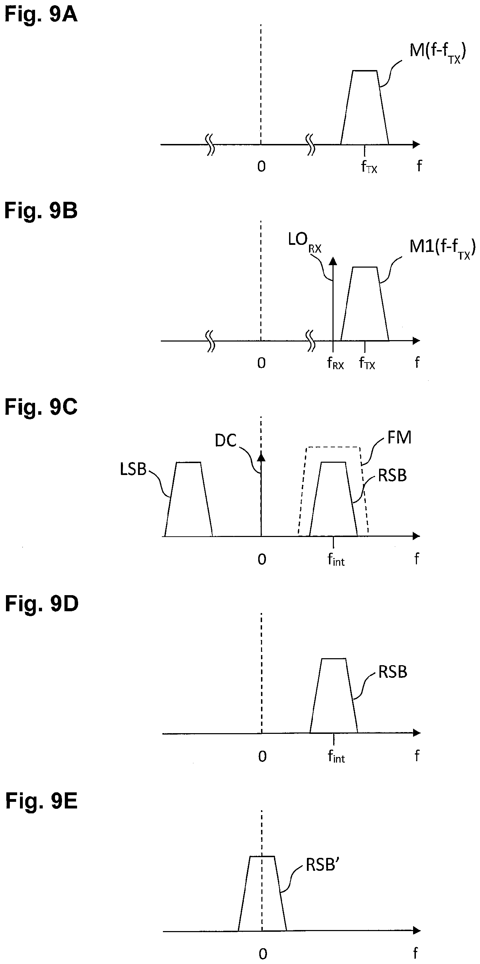

An exemplary spectrum of the input signal IS is depicted by Fig. 9A, wherein reference sign $M(f-f_{TX})$ denotes said spectrum of said modulated signal s5', and wherein $f_{TX}$ denotes a carrier frequency of said modulated signal s5'. As an example, said carrier frequency $f_{TX}$ may be in the range of about 194 THz (terahertz), which corresponds to a wavelength of about 1546 nm (nanometer).

According to a preferred embodiment, the input stage 122 (Fig. 8) comprises a polarisation beam splitter S, which is configured to receive said optical input signal IS, to split said optical input signal IS into its first and second orthogonal polarisation components c1, c2, and to provide at respective first and second outputs said first and second orthogonal polarisation components c1, c2. As an example, the first polarisation component c1 corresponds with a TE polarisation state of the input signal IS, while the second polarisation component c2 corresponds with a TM polarisation state.

The first polarisation component c1 is fed to a first adder a1, which adds the local oscillator signal LO to said first polarisation component c1. As an example, said first adder a1 may comprise an optical coupler configured for adding said signals c1, LO with each other. As a result, the first adder a1 provides at its output a first output signal o1, which is forwarded to a subsequent block 124 that is explained further below.

The second polarisation component c2 is fed to a second adder a2, which adds the local oscillator signal LO to said second polarisation component c2. As an example, said second adder a2 may comprise an optical coupler configured for adding said signals c2, LO with each other. As a result, the second adder a2 provides at its output a second output signal o2, which is forwarded to said subsequent block 124.

Preferably, for said step of adding the local oscillator signal LO to the respective polarisation component c1, c2, a corresponding polarisation component of the local oscillator signal LO is provided. I.e., a first local oscillator signal LO1 comprising e.g. TE polarisation is provided to said first adder a1, whereas a second local oscillator signal LO2 comprising e.g. TM polarisation is provided to said second adder a2.

The suitable polarisation components LO1, LO2 can be provided based on said local oscillator signal LO in a per se known manner, i.e. by an arrangement A of corresponding polarisation filters and/or polarisation rotators or a polarization splitter, details of which are not depicted in figure 8 for the sake of clarity. According to some embodiments, the arrangement A may be included in the input stage 122.

According to further embodiments, the arrangement A providing the suitable polarisation components LO1, LO2 for the adders a1, a2 depending on the local oscillator signal LO may also be provided at some other place within the Kramers-Kronig coherent receiver 120. In this case, the respective suitable polarisation components LO1, LO2 are fed to the input stage 122 in addition to the input signal IS.

An exemplary spectrum of the first output signal o1 is depicted by Fig. 9B, wherein reference sign $M1(f-f_{TX})$ denotes the spectrum of the first polarisation component c1, and wherein $LO_{RX}$ denotes a spectral component representing said added first local oscillator signal LO1. Note that a frequency difference between said carrier frequency $f_{TX}$ and the frequency $f_{RX}$ of said added first local oscillator signal LO1 represents said first frequency shift $\Delta f1$ already explained above. Said frequency difference is in the following also denoted as $f_{int}$: $f_{int} = f_{TX} - f_{RX}$. For the second output signal o2, a similar spectrum is obtained, which is however not depicted for the sake of clarity.

Said Kramers-Kronig coherent receiver 120 (Fig. 8) is configured to convert said two output signals o1, o2 of said input stage 122 from the optical domain to the electrical domain, wherein two electrical output signals are obtained, and to perform an analog-to-digital conversion of said two electrical output signals to obtain two digital signals d1, d2.

One photodiode 124a, 124c and one ADC 124b, 124d per output signal of said input stage 122 may be provided for said conversion of said two electrical output signals to obtain said two digital signals d1, d2, cf. block 124. Thus, in contrast to conventional coherent optical receivers, a reduced number of complex components is required.

According to a preferred embodiment, the bandwidth of said photodiodes 124a, 124c and of said ADCs 124b, 124d is greater than a symbol rate R of the received modulated optical signal s5' to ensure that all spectral components of said modulated optical signal s5' can be more completely processed within said block 124.

Said Kramers-Kronig coherent receiver 120 comprises a signal reconstruction stage 126 configured to transform said two digital signals d1, d2 into presently four output signals characterizing a phase and an amplitude of two polarizations of said modulated optical signal s5'. This enables a demodulation of e.g. DP (dual polarization)-QPSK (quadrature phase shift keying) or DP-QAM signals characterized by said two digital signals d1, d2.

According to an embodiment, said signal reconstruction stage 126 may utilize signal reconstruction techniques based on demodulation of single sideband (SSB) signals via envelope detection.

According to a preferred embodiment, a so-called direct ASSB (asynchronous single side band) converter as proposed by Voelcker, H., "Demodulation of Single-Sideband Signals via Envelope Detection,", IEEE Transactions on Communication Technology, vol. COM-14, pp. 22-30, February 1966, may be used for said signal reconstruction based on demodulation of single sideband (SSB) signals. This publication is referred to as [reference 2], and it is also available on the Internet, cf. http://ieeexplore.ieee.org/document/1089285/. More specifically, an ASSB scheme as depicted by Fig. 3 and explained in detail in the chapters "Envelope Detection of "Full Carrier" SSB" to "Implementation of ASSB" on pp. 24-27 of [reference 2], may form part of one or more embodiments of the disclosure. For this purpose, the subject-matter of [reference 2] and especially the chapters "Full Carrier" SSB" to "Implementation of ASSB" and Fig. 1 to Fig. 6 of [reference 2] are included in the present disclosure.

According to an embodiment, an envelope detection as depicted by Fig. 2 of [reference 2] may be performed by, e.g., photodiode 124a of block 124 of the Kramers-Kronig coherent receiver 120 of Fig. 1 for said first output signal o1, so that the first digital signal d1 is an electrical digital representation of an envelope of said first optical output signal o1. Similarly, a (further) envelope detection as depicted by Fig. 2 of [reference 2] may also be performed by, e.g., photodiode 124c of block 124 of the Kramers-Kronig coherent receiver 120 of Fig. 1 for said second optical output signal o2, so that the second digital signal d2 is an electrical digital representation of an envelope of said second optical output signal o2.

According to a further embodiment, the signal reconstruction stage 126 (Fig. 8) may perform, preferably for each of said digital signals d1, d2, the ASSB scheme as depicted by Fig. 3 of [reference 2], wherein the term

$$\frac{|m_{MP}(t)|}{c},$$ which is used as input to the direct ASSB scheme of Fig. 3 of [reference 2], represents the respective first or second digital signal d1, d2, or is derived from said first or second digital signal. In other words, according to an embodiment, the signal reconstruction stage 126 (Fig. 8) may perform the ASSB scheme as depicted by Fig. 3 of [reference 2], wherein for the term

$$\frac{|m_{MP}(t)|}{c},$$ the first digital signal d1 (or a signal derived therefrom) is used. Similarly, according to a further embodiment, the signal reconstruction stage 126 (Fig. 8) may perform the ASSB scheme as depicted by Fig. 3 of [reference 2], wherein for the term $\frac{|m_{MP}(t)|}{c},$ the sec-

ond digital signal d2 (or a signal derived therefrom) is used.

At an output of the ASSB scheme of Fig. 3 of [reference 2], e.g. based on an input of the first digital signal d1 to the ASSB scheme as depicted by Fig. 3 of [reference 2], a first intermediate signal

$$is1 = 1 + \frac{s1(t)}{c1}$$ is obtained. A spectrum of said first intermediate signal is1 is exemplarily depicted by Fig. 9C. As can be seen, it comprises an upper sideband RSB around frequency $f_{int}$, a lower sideband LSB, and a constant component DC at frequency 0. Note that the spectrum of said first intermediate signal is1 as depicted by Fig. 9C corresponds with an electrical baseband range, as an example below e.g. 50 GHz, as opposed to the optical signal spectrum around e.g. about 194 THz as depicted by Fig. 9A, 9B. This is i.a. due to the envelope detection using the photodiode 124a as explained above.

According to a further embodiment, a filtering process is applied to the (spectrum of said) first intermediate signal is1, cf. Fig. 9C, which removes the lower sideband LSB and the constant component DC, and which leads to a filtered signal the spectrum of which is depicted by Fig. 9D. As can be seen, the upper sideband RSB around intermediate frequency $f_{int}$ is obtained.

According to a further embodiment, the upper sideband RSB is frequency-shifted by said intermediate frequency $f_{int}$ to place it preferably symmetrically around the frequency f=0, whereby a shifted upper sideband RSB' in a low-pass frequency range is obtained, cf. Fig. 9E, which corresponds e.g. to I/Q signals that may be further processed by a digital signal processor (DSP) 128, e.g. for applying conventional signal processing.

According to a further embodiment, the above-explained application of the ASSB scheme as depicted by Fig. 3 of [reference 2] may also be performed by said DSP 128, or by another calculating unit.

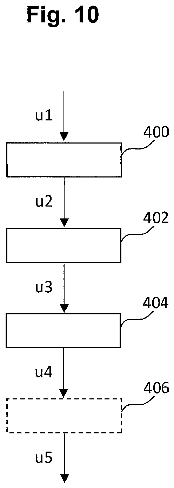

Figure 10 schematically depicts a flow-chart of a method of operating the signal reconstruction stage 126 (Fig. 8) according to a preferred embodiment. Initially, the first digital signal d1 as obtained at an output of block 124 of Fig. 8 is input as an input signal u1 to block 400 of Fig. 10, which processes said input signal u1 according to the equation $u2 = u1 \cdot cos\{H[\ln(u1)]\}$, wherein cos () is the cosine function, wherein H[] is the Hilbert transformation, wherein ln() is the natural logarithm, wherein an output signal u2 is obtained.

In other words, block 400 of Fig. 10 implements an ASSB converter as depicted by Fig. 3 of [reference 2], wherein the input signal u1 corresponds to term

$$\frac{|m_{MP}(t)|}{c},$$ and wherein the output signal u2 corresponds to term $1 + \frac{s(t)}{c}$ of Fig. 3 of [reference 2]. An exemplary spectrum of the output signal u2 is depicted by Fig. 9C and has already been explained above.

Subsequent block 402 (Fig. 10) applies a filtering process to output signal u2, wherein the lower sideband LSB (Fig. 9C) and the constant component DC is removed, which leads to signal u3, having a spectrum as depicted by Fig. 9D.

Subsequent block 404 (Fig. 10) applies frequency shifting to said signal u3 by said intermediate frequency $f_{int}$ (Fig. 9D) to place it preferably symmetrically around the frequency of zero, f=0, whereby a signal spectrum of resulting signal u4 (Fig. 10) in a low-pass frequency range is obtained, cf. Fig. 9E. Signal u4 is a complex-valued signal having I and Q components.

Optionally, signal u4 may be downsampled (decimation) in step 406, wherein a decimated signal u5 is obtained.

The above-explained process illustrated by Fig. 10 effects a transformation of said first digital signal d1 into two output signals characterizing a phase and an amplitude or I and Q components (characterising complex signal values) of a first polarization of said modulated optical signal s5'.

According to a further embodiment, the above-explained process illustrated by Fig. 10 may be performed by said DSP 128.

According to a further embodiment, the above-explained process illustrated by Fig. 10 may also be performed for said second digital signal d2. In this case, a transformation of said second digital signal d2 into two further output signals characterizing a phase and an amplitude or I, Q values of the second polarization of said modulated optical signal s5' is effected.

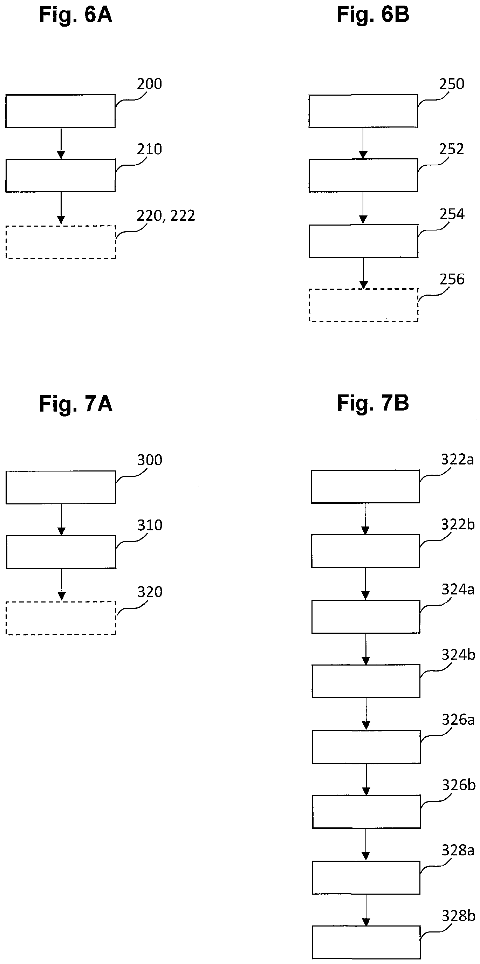

Figure 6A schematically depicts a flowchart of a method of operating the optical transceiver 100 (Fig. 1) according to an embodiment. In a first step 200, said continuous optical signal s01 is provided at said first frequency f1. In a subsequent step 210, said continuous optical signal s01 is power split to produce the optical carrier signal s1 and said local oscillator signal s6 for said Kramers-Kronig coherent receiver 120. In an optional further step 220, said transceiver 100a modulates said optical carrier signal s1 to generate a modulated optical output signal s2, e.g. for transmission via an optical transmission channel to a remote optical receiver. Said transceiver 100a may also receive a modulated optical signal s5' and may add said local oscillator signal s6 with said received optical signal s5' to enable demodulation of a data stream from said received modulated optical signal s5'.

Figure 6B schematically depicts a simplified flowchart of a method of operating the optical transceiver 100 (Fig. 1) according to a further embodiment.

In step 250, an input stage 122 of the Kramers-Kronig coherent receiver 120 (Fig. 1) receives a modulated optical signal s5', and in step 252 said local oscillator signal s6 is added to said received modulated optical signal s5' to enable further processing of the so obtained sum signal. After this digital signals d1, d2 as explained above with reference to figure 1 are obtained from said sum signal (step not shown in figure 6B), and in subsequent step 254, said digital signals d1, d2 are transformed by said signal reconstruction stage 126 (Fig. 1) into output signals characterising a phase and an amplitude of two polarisations of said modulated optical signal s5'. In the further, optional step 256, a demodulation based on said output signals of the signal reconstruction stage 126 may be done.

Figure 2 schematically depicts a block diagram of an optical transmission system 1000 according to an embodiment. The optical transmission system 1000 comprises two optical transceivers 100a, 100b, each of which may comprise a configuration and/or functionality at least similar to the one as explained above with reference to the optical transceiver 100 of Fig. 1. For example, the optical transmitters 110 with the optical modulators 112 and the Kramers-Kronig coherent receivers 120 may be identical regarding their configuration and/or functionality for both optical transceivers 100a, 100b.

The first optical transceiver 100a comprises a first laser source 131 which is configured to provide a first, preferably continuous, optical signal s01 at a first frequency f1, cf. Fig. 3A.

The second optical transceiver 100b comprises a second laser source 132 which is configured to provide a second, preferably continuous, optical signal s02 at a second frequency f2, cf. Fig. 3A. The second frequency f2 is shifted with respect to said first frequency f1 by a non-vanishing second frequency shift $\Delta f2$. Preferably, absolute values of said first and second frequency shifts $\Delta f1$, $\Delta f2$ are equal.

An optical output of the transmitter 110 of the first optical transceiver 100a is connected with an optical input of a Kramers-Kronig coherent receiver 120 of said second optical transceiver 100b via a first optical fiber link 1002a, and an optical output of the transmitter 110 of the second optical transceiver 100b is connected with an optical input of a Kramers-Kronig coherent receiver 120 of said first optical transceiver 100a via a second optical fiber link 1002b. This way, the transceivers 100a, 100b may exchange optical signals such as the modulated optical output signals s2, s5 with each other. The correspondingly received optical signals are denoted with reference signs s2', s5'.

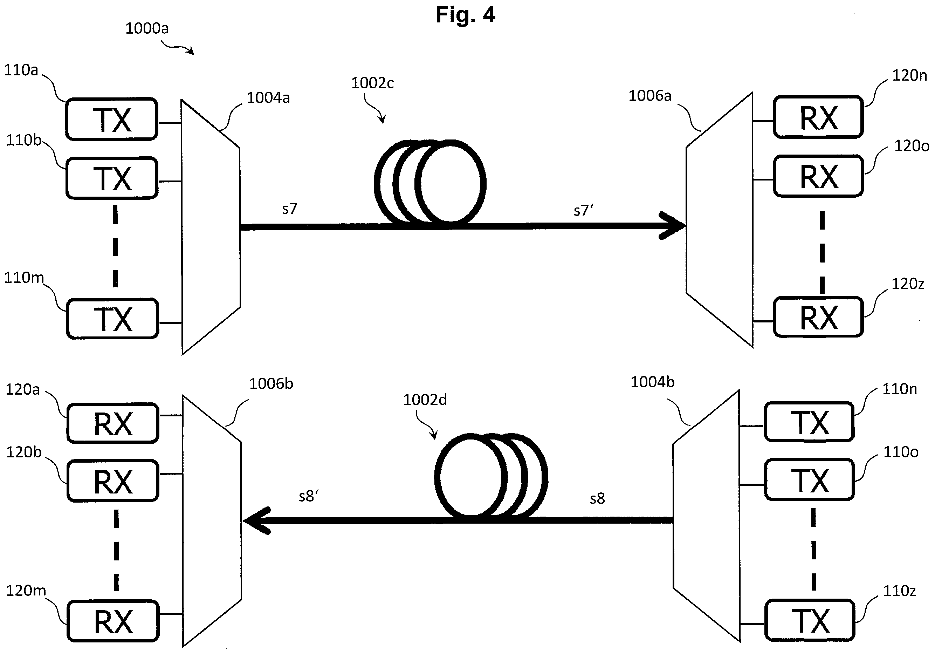

Figure 7A schematically depicts a simplified flow-chart of a method of operating the optical transmission system 1000 of figure 4 according to an embodiment. In a first step 300, the laser source 131 of said first optical transceiver 100a provides said first continuous optical signal s01. In a further step 310, the laser source 132 of said second optical transceiver 100b provides said second continuous optical signal s02, a center frequency of which being different from the center frequency of said first continuous optical signal s01, the frequency difference being expressed by said second frequency shift $\Delta f2$. In a further optional step, 320 the transceivers 100a, 100b may use the signals s01, s02 for transmitting optical signals and/or processing received optical signal of.

According to some embodiments, at least some of the steps 300, 310, 320 above may also be performed simultaneously to each other or in another sequence as explained above.

Figure 7B schematically depicts a simplified flow-chart of a method of operating the optical transmission system 1000 of figure 4 according to a further embodiment.

In step 322a, the first optical transceiver 100a (Fig. 2) derives a first optical carrier signal s1 and a first local oscillator signal s6 from said first optical signal s01. In step 322b, the second optical transceiver 100b (Fig. 2) derives a second optical carrier signal s4 and a second local oscillator signal s3 from said second optical signal s02. In view of the second frequency shift $\Delta f2$ between the signals s01, s02, the same second frequency shift $\Delta f2$ is also present between the first and second optical carrier signals s1, s2 and the first and second local oscillator signals s6, s3.

In step 324a, the modulator 112 of said first optical transceiver 100a modulates said first optical carrier signal s1 with a first symbol rate, to obtain a first modulated optical output signal s2. In step 324b, the modulator 112 of said second optical transceiver 100b modulates said second optical carrier signal s4 with a second symbol rate, to obtain a second modulated optical output signal s5. According to an embodiment, said second symbol rate is equal to said first symbol rate.

In step 326a, the first optical transceiver 100a transmits said first modulated optical output signal s2 via the first optical fiber link 1002a to the second optical transceiver 100b. In step 326b, the second optical transceiver 100b transmits said second modulated optical output signal s5 via the second optical fiber link 1002b to the first optical transceiver 100a

In step 328a, said first modulated optical output signal s2 is received as signal s2', which is an attenuated version of signal s2. As is well-known, other linear and/or nonlinear effects may also influence the transmitted signal s2 resulting in the received signal s2', which, however is not relevant for the further explanations of the embodiments. Similarly, in step 328b, said second modulated optical output signal s5 is received as signal s5'.

According to some embodiments, one or more amplifiers (not shown), e.g. optical fiber amplifiers (for example, of the EDFA type) and the like, may be provided within said optical fiber link 1002a and/or said optical fiber link 1002b.

Optionally, in steps 328a, 328b the received signals s2', s5' may also be processed, for example according to the procedure as explained above with reference to Fig. 6B.

According to some embodiments, at least some of the steps 322a to 328b above may also be performed simultaneously to each other or in another sequence as explained above.

Fig. 3B depicts a signal spectrum SS2 associated with said modulated optical output signal s5 of the second optical transceiver 100b (Fig. 2). As the first optical transceiver 100a provides a local oscillator signal s6 with the first frequency f1 (Fig. 3B), an efficient signal processing by means of the Kramers-Kronig coherent receiver 120 is enabled. The same applies to the first signal transmission direction from the first optical transceiver 100a, cf. said modulated optical output signal s2, and its processing within the Kramers-Kronig coherent receiver 120 of the second optical transceiver 100b. For the second frequency shift Δf2 and potential associated frequency ranges, similar observations apply as explained above for the first frequency shift Δf1 and its potential ranges r1, r2 with respect to Fig. 3A, 3C.

Figure 4 schematically depicts a block diagram of an optical transmission system 1000a according to a further embodiment. The system 1000a may be considered as a point-to-point wavelength division multiplexed (WDM) system, as a plurality of wavelength channels (or frequency channels, respectively) are transmitted in the same fiber.

According to the present embodiment, n many optical transceivers are provided at a first location, wherein the transmitters of said n many optical transceivers are denoted in Fig. 4 with reference signs 110a, 110b, ..., 110m, and wherein the optical receivers of said n many optical transceivers are denoted in Fig. 4 with reference signs 120a, 120b, ..., 120m. According to a preferred embodiment, each 2-tuple of transmitter and receiver (110i, 120i), i= a..m, of Fig. 4 may form one optical transceiver 100 as explained above with reference to Fig. 1 and may comprise at least a similar configuration and/or functionality as said transceiver 100. In other words, the n many transmitters 110a, 110b, ..., 110m and n many receivers 120a, 120b, ..., 120m of Fig. 4 may be provided in the form of n many optical transceivers of the type 100 as explained with reference to Fig. 1.

Also, n many further optical transceivers are provided at a second location, wherein the transmitters of said n many further optical transceivers are denoted in Fig. 4 with reference signs 110n, 110o, ..., 110z, and wherein the receivers of said n many further optical transceivers are denoted in Fig. 4 with reference signs 120n, 120o, ..., 120z. According to a preferred embodiment, each 2-tuple of transmitter and receiver (110i, 120i), i= n..z, of Fig. 4 may form one further optical transceiver 100 as explained above with reference to Fig. 1 and may comprise at least a similar configuration and/or functionality as said transceiver 100. In other words, the n many further transmitters 110n, 110o, ..., 110z and n many further receivers 120n, 120o, ..., 120z of Fig. 4 may be provided in the form of n many further optical transceivers of the type 100 as explained with reference to Fig. 1.

As can be seen from Fig. 4, the transmitters 110a, 110b, ..., 110m are coupled to a first transmitter multiplexer 1004a, and the receivers 120n, 120o, ..., 120z are coupled to a first receiver multiplexer 1006a, wherein said multiplexers 1004a, 1006a are coupled by means of an optical fiber 1002c. This configuration e.g. enables the transmitter 110a to transmit (modulated) optical output signals s2 (Fig. 2) to the receiver 120n, the transmitter 110b to transmit (modulated) optical output signals to the receiver 120o, and so on.

Similarly, the transmitters 110n, 110o, ..., 110z are coupled to a second transmitter multiplexer 1004b, and the receivers 120a, 120b, ..., 120m are coupled to a second receiver multiplexer 1006b, wherein said multiplexers 1004b, 1006b are coupled by means of an optical fiber 1002d. This configuration e.g. enables the transmitter 110n to transmit (modulated) optical output signals s5 (Fig. 2) to the receiver 120a, the transmitter 110o to transmit (modulated) optical output signals to the receiver 120b, and so on.

A resulting first WDM transmission signal in a first transmission direction is denoted with reference sign s7 in Fig. 4. At an output of the optical fiber 1002c, said first WDM transmission signal s7 is provided as signal s7' to the first receiver multiplexer 1006a. A resulting second WDM transmission signal in a second transmission direction is denoted with reference sign s8 in Fig. 4. At an output of the optical fiber 1002d, said second WDM transmission signal s8 is provided as signal s8' to the second receiver multiplexer 1006b.

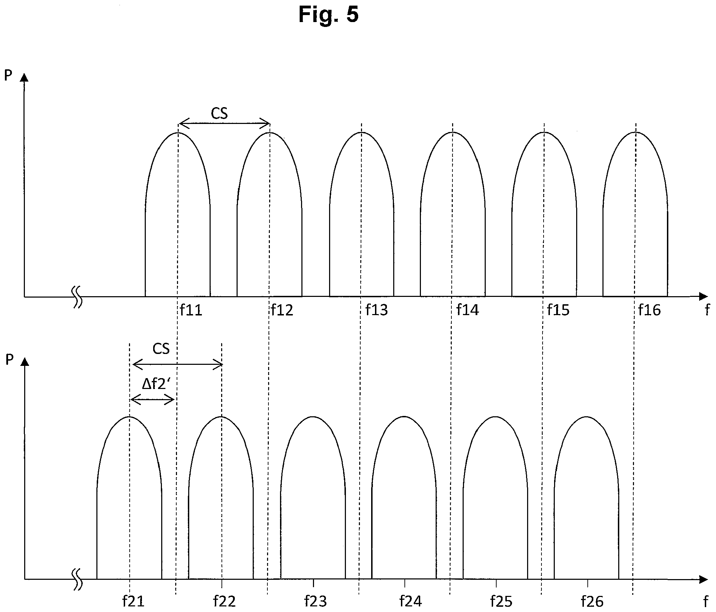

According to a preferred embodiment, each of said n many optical transceivers of Fig. 4 comprises a laser source a signal frequency of which is shifted with respect to the signal frequency of the other optical transceivers by a predetermined channel spacing to enable a proper WDM transmission scheme. This is exemplarily depicted for six carrier frequencies f11 to f16 as illustrated by Fig. 5.

As an example, a first transceiver, which comprises the transmitter 110a and the receiver 120a of Fig. 4, comprises a laser source (not shown) providing a continuous optical signal at frequency f11, a second transceiver, which comprises the transmitter 110b and the receiver 120b, comprises a laser source (not shown) providing a continuous optical signal at frequency f12, and so on, wherein the channel spacing CS (Fig. 5) characterizes a difference of neighbouring carrier frequencies f11, f12. Preferably, said channel spacing CS is substantially constant for all transceivers.

Similarly, each of said n many further optical transceivers comprising the components 120n to 120z and 110n to 110z of Fig. 4 comprises a laser source a signal frequency of which is shifted with respect to the signal frequency of the other further optical transceivers by said predetermined channel spacing CS to enable said WDM transmission scheme. This is exemplarily depicted for six carrier frequencies f21 to f26 as illustrated by Fig. 5.

As an example, a first further transceiver, which comprises the transmitter 110n and the receiver 120n of Fig. 4, comprises a laser source (not shown) providing a continuous optical signal at frequency f21, a second further transceiver, which comprises the transmitter 110o and the receiver 120o of Fig. 4, comprises a laser source (not shown) providing a continuous optical signal at frequency f22, and so on, wherein the channel spacing CS characterizes a difference of neighbouring carrier frequencies f21, f22. Preferably, said channel spacing CS is substantially constant for all further transceivers, too.

Advantageously, the respective center frequencies f21, f22, ... of the further optical transceivers of the present embodiment (or of their laser sources, respectively) are frequency-shifted with respect to the center frequencies f11, f12, ... by a predetermined second frequency shift Δf2' (Fig. 5).

This enables n many transceiver pairs according to Fig. 4 to each operate in the way explained above in detail with reference to the transceiver pair 100a, 100b of Fig. 2, 3A, 3B.

As an example, a first transceiver pair of this type may comprise transmitter 110a and receiver 120a constituting a first transceiver of said transceiver pair, and transmitter 110n and receiver 120n as a second transceiver of said transceiver pair. As their local laser sources provide continuous optical signals with respectively shifted (center) frequencies of f11 and f21, an efficient signal reception, optical downconversion and further processing by means of their respective Kramers-Kronig coherent receivers is enabled. The same advantages are obtained for further transceiver pairs of the configuration of Fig. 4, that operate within other WDM channels, i.e. different center frequencies, e.g. f12 and f22, while the relative frequency shift of their respective local laser sources is also characterized by said second frequency shift Δf2'.

According to a further embodiment, the channel spacing for the WDM scheme is at least slightly greater than a symbol rate R used for modulating said optical carrier signals.

According to a further embodiment, the second frequency shift Δf2' may be greater than about 40 percent of a said symbol rate. According to further embodiments, other values and/or ranges may be employed for said second frequency shift Δf2', similar to those values and/or ranges explained above with respect to Fig. 3A, 3B, 3C.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Optical transceiver (100; 100a, 100b) comprising an optical transmitter (110) having an optical modulator (112) for modulating (222) an optical carrier signal (s1), a coherent optical receiver (120), which is a Kramers-Kronig coherent receiver (120), for demodulating data from a received data-modulated optical signal (s5, s5'), and a laser source (130; 131, 132) being connected to provide (200), at a first frequency (f1), the optical carrier signal (s1) and an optical local oscillator signal (s6), the coherent optical receiver (120) being configured to demodulate data from said received data-modulated optical signal (s5, s5') at a second carrier frequency (f2), the second carrier frequency (f2) being shifted from said first frequency (f1) by a first frequency shift (Δf1), wherein said first frequency shift (Δf1) ranges between about 40 percent of a symbol rate of said modulated optical signals (s5') and about 65 percent of said symbol rate of said modulated optical signals (s5').

2. Optical transceiver (100; 100a, 100b) according to claim 1, wherein said coherent optical receiver (120) comprises an input stage (122) which is configured to receive (250) said modulated optical signal (s5, s5') and said local oscillator signal (s6), and to add (252) said local oscillator signal (s6) to said modulated optical signal (s5, s5').

3. Optical transceiver (100; 100a, 100b) according to claim 2, wherein said coherent optical receiver (120) is configured to convert two output signals of said input stage (122) from the optical domain to the electrical domain, wherein two electrical output signals are obtained, and to perform an analog-to-digital conversion of said two electrical output signals to obtain two digital signals (d1, d2).

4. Optical transceiver (100; 100a, 100b) according to claim 3, wherein said coherent optical receiver (120) comprises a signal reconstruction stage (126) configured to transform (254) said two digital signals (d1, d2) into output signals characterizing a phase and an amplitude of two polarizations of said modulated optical signal (s5, s5').

5. Optical transceiver (100; 100a, 100b) according to one of the preceding claims, wherein said optical modulator (112) is a polarisation division multiplexing, PDM, I/Q modulator configured to provide two orthogonal polarizations of said optical carrier signal (s1) and to modulate (222) phase and amplitude of said two orthogonal polarizations.

6. Optical transceiver (100; 100a, 100b) according to one of the preceding claims, wherein said first frequency (f1) is shifted from said second frequency (f2) by, at least, about half of a baud rate of said optical receiver (120).

7. Optical transceiver (100; 100a, 100b) according to one of the preceding claims, wherein said first frequency (f1) is shifted from said second frequency (f2) by, at least, about half of a baud rate of said optical modulator (112).

8. Optical transceiver (100; 100a, 100b) according to one of the preceding claims, further comprising an optical power splitter (140) connected to receive light from said laser source (130) and to produce said optical carrier signal (s1) on one optical output thereof and to produce said optical local oscillator signal (s6) on another output thereof.

9. Method of operating an optical transceiver (100; 100a, 100b) comprising an optical transmitter (110) having an optical modulator (112) for modulating an optical carrier signal (s1), a coherent optical receiver (120), which is a Kramers-Kronig coherent receiver (120), for demodulating data from a received data-modulated optical signal (s5, s5'), and a laser source (130; 131, 132), wherein said method comprises: providing (200), by means of a laser source (130), at a first frequency (f1), the optical carrier signal (s1) and an optical local oscillator signal (s6), said coherent optical receiver (120) demodulating data from said received data-modulated optical signal (s5, s5') at a second carrier frequency (f2), the second carrier frequency (f2) being shifted from said first frequency (f1) by a first frequency shift ($\Delta$f1), wherein said first frequency shift ($\Delta$f1) ranges between about 40 percent of a symbol rate of said modulated optical signals (s5') and about 65 percent of said symbol rate of said modulated optical signals (s5').

10. Optical transmission system (1000; 1000a) comprising at least two optical transceivers (100a, 100b) according to one of the claims 1 to 8, wherein a laser source (131) of a first one (100a) of said at least two transceivers (100a, 100b) is configured to provide a first optical signal (s01) at said first frequency (f1; f11), wherein a laser source (132) of a second one (100b) of said at least two transceivers (100a, 100b) is configured to provide a second optical signal (s02) at a second frequency (f2; f21), which is shifted with respect to said first frequency (f1) by a non-vanishing second frequency shift ($\Delta$f2; $\Delta$f2').

11. Optical transmission system (1000; 1000a) according to claim 10, wherein said first optical transceiver (100a) is configured to provide a first modulated optical output signal (s2) with a first symbol rate, and wherein said second frequency shift ($\Delta$f2) ranges between about 40 percent of a symbol rate of said first modulated optical output signal (s2) and about 65 percent of said symbol rate of said first modulated optical output signal (s2).

12. Method of operating an optical transmission system (1000; 1000a) comprising at least two optical transceivers (100a, 100b) according to one of the claims 1 to 8, said method comprising: providing (300), by means of a laser source (131) of a first one (100a) of said at least two transceivers (100a, 100b), a first optical signal (s01) at said first frequency (f1; f11), providing (310), by means of a laser source (132) of a second one (100b) of said at least two transceivers (100a, 100b), a second optical signal (s02) at a second frequency (f2; f21), which is shifted with respect to said first frequency (f1) by a non-vanishing second frequency shift ($\Delta$f2; $\Delta$f2').

13. Method according to claim 12, said method further comprising: providing (322a), by means of a laser source (131) of said first optical transceiver (100a), a first optical carrier signal (s1) and a first local oscillator signal (s6), providing (322b), by means of a laser source (132) of said second optical transceiver (100b), a second optical carrier signal (s4) and a second local oscillator signal (s3).

14. Method according to one of the claims 12 to 13, said method further comprising: modulating (324a), by means of an optical modulator (112) of said first optical transceiver (100a), said first optical carrier signal (s1) with a first symbol rate, to obtain a first modulated optical output signal (s2), and modulating (324b), by means of an optical modulator (112) of said second optical transceiver (100b), said second optical carrier signal (s4) with a second symbol rate, to obtain a second modulated optical output signal (s5).

15. Method according to claim 14, said method further comprising: transmitting (326a) said first modulated optical output signal (s2) to an optical receiver (120) of said second transceiver (100b), and transmitting (326b) said second modulated optical output signal (s5) to an optical receiver (120) of said first transceiver (100a).

16. Method according to claim 13, said method further comprising: receiving and processing (328a) said first modulated optical output signal (s2) at the receiver (120) of said second transceiver (100b), and receiving and processing (328b) said second modulated optical output signal (s5) at the receiver (120) of said first transceiver (100a).

**Patentansprüche**

1. Optischer Sendeempfänger (100; 100a, 100b), der einen optischen Sender (110) mit einem optischen Modulator (112) zum Modulieren (222) eines optischen Trägersignals (s1), einen kohärenten optischen Empfänger (120), der ein kohärenter Kramers-Kronig-Empfänger (120) ist, zum Demodulieren von Daten eines empfangenen datenmodulierten optischen Signals (s5, s5') und eine Laserquelle (130; 131, 132), die verbunden ist, um das optische Trägersignal (s1) und ein optisches lokales Oszillatorsignal (s6) mit einer ersten Frequenz (f1) bereitzustellen (200), umfasst, wobei der kohärente optische Empfänger (120) dazu ausgelegt ist, Daten vom empfangenen datenmodulierten optischen Signal (s5, s5') mit einer zweiten Trägerfrequenz (f2) zu demodulieren, wobei die zweite Trägerfrequenz (f2) von der ersten Frequenz (f1) um eine erste Frequenzverschiebung ($\Delta$f1) verschoben ist, wobei die erste Frequenzverschiebung ($\Delta$f1) zwischen ungefähr 40 Prozent einer Symbolrate der modulierten optischen Signale (s5') und ungefähr 65 Prozent der Symbolrate der modulierten optischen Signale (s5') liegt.

2. Optischer Sendeempfänger (100; 100a, 100b) nach Anspruch 1, wobei der kohärente optische Empfänger (120) eine Eingangsstufe (122) umfasst, die dazu ausgelegt ist, das modulierte optische Signal (s5, s5') und das lokale Oszillatorsignal (s6) zu empfangen (250) und das lokale Oszillatorsignal (s6) zum modulierten optischen Signal (s5, s5') hinzuzufügen (252).

3. Optischer Sendeempfänger (100; 100a, 100b) nach Anspruch 2, wobei der kohärente optische Empfänger (120) dazu ausgelegt ist, zwei Ausgangssignale der Eingangsstufe (122) von der optischen Domäne zur elektrischen Domäne umzuwandeln, wobei zwei elektrische Ausgangssignale erhalten werden, und eine Analog-Digital-Umwandlung der zwei elektrischen Ausgangssignale durchzuführen, um zwei digitale Signale (d1, d2) zu erhalten.

4. Optischer Sendeempfänger (100; 100a, 100b) nach Anspruch 3, wobei der kohärente optische Empfänger (120) eine Signalrekonstruktionsstufe (126) umfasst, die dazu ausgelegt ist, die zwei digitalen Signale (d1, d2) in Ausgangssignale, die eine Phase und eine Amplitude von zwei Polarisierungen des modulierten optischen Signals (s5, s5') charakterisieren, zu transformieren (254).

5. Optischer Sendeempfänger (100; 100a, 100b) nach einem der vorhergehenden Ansprüche, wobei der optische Modulator (112) ein Polarisationsmultiplexing(PM)-I/Q-Modulator ist, der dazu ausgelegt ist, zwei orthogonale Polarisierungen des optischen Trägersignals (s1) bereitzustellen und Phase und Amplitude der zwei orthogonalen Polarisierungen zu modulieren (222) .

6. Optischer Sendeempfänger (100; 100a, 100b) nach einem der vorhergehenden Ansprüche, wobei die erste Frequenz (f1) von der zweiten Frequenz (f2) um mindestens ungefähr eine halbe Baudrate des optischen Empfängers (120) verschoben ist.

7. Optischer Sendeempfänger (100; 100a, 100b) nach einem der vorhergehenden Ansprüche, wobei die erste Frequenz (f1) von der zweiten Frequenz (f2) um mindestens ungefähr eine halbe Baudrate des optischen Modulators (112) verschoben ist.

8. Optischer Sendeempfänger (100; 100a, 100b) nach einem der vorhergehenden Ansprüche, der ferner einen optischen Leistungsteiler (140) umfasst, der verbunden ist, um Licht von der Laserquelle (130) zu empfangen und das optische Trägersignal (s1) an einem optischen Ausgang davon zu produzieren und das optische lokale Oszillatorsignal (s6) an einem anderen Ausgang davon zu produzieren.

9. Verfahren zum Betreiben eines optischen Sendeempfängers (100; 100a, 100b), der einen optischen Sender (110) mit einem optischen Modulator (112) zum Modulieren eines optischen Trägersignals (s1), einen kohärenten optischen Empfänger (120), der ein kohärenter Kramers-Kronig-Empfänger (120) ist, zum Demodulieren von Daten eines empfangenen datenmodulierten optischen Signals (s5, s5') und eine Laserquelle (130; 131, 132) umfasst, wobei das Verfahren Folgendes umfasst: Bereitstellen (200) des optischen Trägersignals (s1) und eines optischen lokalen Oszillatorsignals (s6) mittels einer Laserquelle (130) mit einer ersten Frequenz (f1), wobei der kohärente optische Empfänger (120) Daten vom empfangenen datenmodulierten optischen Signal (s5, s5') mit einer zweiten Trägerfrequenz (f2) demoduliert, wobei die zweite Trägerfrequenz (f2) von der ersten Frequenz (f1) um eine erste Frequenzverschiebung ($\Delta$f1) verschoben ist, wobei die erste Frequenzverschiebung ($\Delta$f1) zwischen ungefähr 40 Prozent einer Symbolrate der modulierten optischen Signale (s5') und ungefähr 65 Prozent der Symbolrate der modulierten optischen Signale (s5') liegt.

10. Optisches Übertragungssystem (1000; 1000a), das mindestens zwei optische Sendeempfänger (100a, 100b) nach einem der Ansprüche 1 bis 8 umfasst, wobei eine Laserquelle (131) des ersten (100a) der mindestens zwei Sendeempfänger (100a, 100b) dazu ausgelegt ist, ein erstes optisches Signal (s01) mit der ersten Frequenz (f1; f11) bereitzustellen, wobei eine Laserquelle (132) eines zweiten (100b) der mindestens zwei Sendeempfänger (100a, 100b) dazu ausgelegt ist, ein zweites optisches Signal (s02) mit einer zweiten Frequenz (f2; f21), die mit Bezug auf die erste Frequenz (f1) um eine nicht verschwindende Frequenzverschiebung ($\Delta$f2; $\Delta$f2') verschoben ist, bereitzustellen.

11. Optisches Übertragungssystem (1000; 1000a) nach Anspruch 10, wobei der erste optische Sendeempfänger (100a) dazu ausgelegt ist, ein erstes moduliertes optisches Ausgangssignal (s2) mit einer ersten Symbolrate bereitzustellen, und wobei die zweite Frequenzverschiebung ($\Delta$f2) zwischen ungefähr 40 Prozent einer Symbolrate des ersten modellierten optischen Ausgangssignals (s2) und ungefähr 65 Prozent der Symbolrate des ersten modellierten optischen Ausgangssignals (s2) liegt.

12. Verfahren zum Betreiben eines optischen Übertragungssystems (1000; 1000a), das mindestens zwei optische Sendeempfänger (100a, 100b) nach einem der Ansprüche 1 bis 8 umfasst, wobei das Verfahren Folgendes umfasst: Bereitstellen (300) eines ersten optischen Signals (s01) mit der ersten Frequenz (f1; f11) mittels einer Laserquelle (131) eines ersten (100a) der mindestens zwei Sendeempfänger (100a, 100b), Bereitstellen (310) eines zweiten optischen Signals (s02) mit einer zweiten Frequenz (f2; f21), die mit Bezug auf die erste Frequenz (f1) um eine nicht verschwindende Frequenzverschiebung (Δf2; Δf2') verschoben ist, mittels einer Laserquelle (132) eines zweiten (100b) der mindestens zwei Sendeempfänger (100a, 100b).

13. Verfahren nach Anspruch 12, wobei das Verfahren ferner Folgendes umfasst: Bereitstellen (322a) eines ersten optischen Trägersignals (s1) und eines ersten lokalen Oszillatorsignals (s6) mittels einer ersten Laserquelle (131) des ersten optischen Sendeempfängers (100a), Bereitstellen (322b) eines zweiten optischen Trägersignals (s4) und eines zweiten lokalen Oszillatorsignals (s3) mittels einer Laserquelle (132) des zweiten optischen Sendeempfängers (100b).

14. Verfahren nach einem der Ansprüche 12 bis 13, wobei das Verfahren ferner Folgendes umfasst: Modulieren (324a) des ersten optischen Trägersignals (s1) mittels eines optischen Modulators (112) des ersten optischen Sendeempfängers (100a) mit einer ersten Symbolrate, um ein erstes moduliertes optisches Ausgangssignal (s2) zu erhalten, und Modulieren (324b) des zweiten optischen Trägersignals (s4) mittels eines optischen Modulators (112) des zweiten optischen Sendeempfängers (100b) mit einer zweiten Symbolrate, um ein zweites moduliertes optisches Ausgangssignal (s5) zu erhalten.

15. Verfahren nach Anspruch 14, wobei das Verfahren ferner Folgendes umfasst: Übertragen (326a) des ersten modellierten optischen Ausgangssignals (s2) zu einem optischen Empfänger (120) des zweiten Sendeempfängers (100b) und Übertragen (326b) des zweiten modellierten optischen Ausgangssignals (s5) zu einem optischen Empfänger (120) des ersten Sendeempfängers (100a).

16. Verfahren nach Anspruch 13, wobei das Verfahren ferner Folgendes umfasst: Empfangen und Verarbeiten (328a) des ersten modellierten optischen Ausgangssignals (s2) am Empfänger (120) des zweiten Sendeempfängers (100b) und Empfangen und Verarbeiten (328b) des zweiten modellierten optischen Ausgangssignals (s5) am Empfänger (120) des ersten Sendeempfängers (100a).

**Revendications**

1. Émetteur-récepteur optique (100 ; 100a, 100b) comprenant un émetteur optique (110) ayant un modulateur optique (112) pour moduler (222) un signal porteur optique (s1), un récepteur optique cohérent (120), qui est un récepteur cohérent Kramers-Kronig (120), pour démoduler des données provenant d'un signal optique reçu de données modulées (s5, s5'), et une source laser (130 ; 131, 132) qui est connectée pour fournir (200), à une première fréquence (f1), le signal porteur optique (s1) et un signal d'oscillateur local (s6) optique, le récepteur optique cohérent (120) étant configuré pour démoduler des données provenant dudit signal optique reçu de données modulées (s5, s5') à une deuxième fréquence porteuse (f2), la deuxième fréquence porteuse (f2) étant décalée de ladite première fréquence (f1) d'un premier décalage de fréquence (Δf1), dans lequel ledit premier décalage de fréquence (Δf1) se situe entre environ 40 pour cent d'un débit de symboles desdits signaux optiques modulés (s5') et environ 65 pour cent dudit débit de symboles desdits signaux optiques modulés (s5').

2. Emetteur-récepteur optique (100 ; 100a, 100b) selon la revendication 1, dans lequel ledit récepteur optique cohérent (120) comprend un étage d'entrée (122) qui est configuré pour recevoir (250) ledit signal optique modulé (s5, s5') et ledit signal d'oscillateur local (s6), et pour ajouter (252) ledit signal d'oscillateur local (s6) audit signal optique modulé (s5, s5').

3. Emetteur-récepteur optique (100 ; 100a, 100b) selon la revendication 2, dans lequel ledit récepteur optique cohérent (120) est configuré pour convertir deux signaux de sortie dudit étage d'entrée (122) du domaine optique au domaine électrique, dans lequel deux signaux électriques de sortie sont obtenus, et pour effectuer une conversion analogique-numérique desdits deux signaux électriques de sortie pour obtenir deux signaux numériques (d1, d2).

4. Emetteur-récepteur optique (100 ; 100a, 100b) selon la revendication 3, dans lequel ledit récepteur optique cohérent (120) comprend un étage de reconstruction de signal (126) configuré pour transformer (254) lesdits deux signaux numériques (d1, d2) en signaux de sortie caractérisant une phase et une amplitude de deux polarisations dudit signal optique modulé (s5, s5').

5. Emetteur-récepteur optique (100 ; 100a, 100b) selon l'une des revendications précédentes, dans lequel ledit modulateur optique (112) est un modulateur I/Q de multiplexage par répartition en polarisation, PDM, configuré pour fournir deux polarisations orthogonales dudit signal porteur optique (s1) et pour moduler (222) la phase et l'amplitude desdites deux polarisations orthogonales.

6. Emetteur-récepteur optique (100 ; 100a, 100b) selon l'une des revendications précédentes, dans lequel ladite première fréquence (f1) est décalée de ladite deuxième fréquence (f2) d'au moins environ la moitié d'un débit en bauds dudit récepteur optique (120).

7. Emetteur-récepteur optique (100 ; 100a, 100b) selon l'une des revendications précédentes, dans lequel ladite première fréquence (f1) est décalée de ladite deuxième fréquence (f2) d'au moins environ la moitié d'un débit en bauds dudit modulateur optique (112).

8. Emetteur-récepteur optique (100 ; 100a, 100b) selon l'une des revendications précédentes, comprenant en outre un séparateur de puissance optique (140) connecté pour recevoir de la lumière à partir de ladite source laser (130) et pour produire ledit signal porteur optique (s1) sur une sortie optique de celui-ci et pour produire ledit signal d'oscillateur local (s6) optique sur une autre sortie de celui-ci.

9. Procédé de fonctionnement d'un émetteur-récepteur optique (100 ; 100a, 100b) comprenant un émetteur optique (110) ayant un modulateur optique (112) pour moduler un signal porteur optique (s1), un récepteur optique cohérent (120), qui est un récepteur cohérent Kramers-Kronig (120), pour démoduler des données provenant d'un signal optique reçu de données modulées (s5, s5'), et une source laser (130 ; 131, 132),
dans lequel ledit procédé comprend les étapes suivantes : fournir (200), au moyen d'une source laser (130), à une première fréquence (f1), le signal porteur optique (s1) et un signal d'oscillateur local (s6) optique, ledit récepteur optique cohérent (120) démodulant des données provenant dudit signal optique reçu de données modulées (s5, s5') à une deuxième fréquence porteuse (f2), la deuxième fréquence porteuse (f2) étant décalée de ladite première fréquence (f1) d'un premier décalage de fréquence (Δf1), dans lequel ledit premier décalage de fréquence (Δf1) se situe entre environ 40 pour cent d'un débit de symboles desdits signaux optiques modulés (s5') et environ 65 pour cent dudit débit de symboles desdits signaux optiques modulés (s5').

10. Système de transmission optique (1000 ; 1000a) comprenant au moins deux émetteurs-récepteurs (100a, 100b) optiques selon l'une des revendications 1 à 8, dans lequel une source laser (131) d'un premier émetteur-récepteur (100a) desdits au moins deux émetteurs-récepteurs (100a, 100b) est configurée pour fournir un premier signal optique (s01) à ladite première fréquence (f1 ; f11), dans lequel une source laser (132) d'un deuxième émetteur-récepteur (100b) desdits au moins deux émetteurs-récepteurs (100a, 100b) est configurée pour fournir un deuxième signal optique (s02) à une deuxième fréquence (f2 ; f21), qui est décalée par rapport à ladite première fréquence (f1) d'un deuxième décalage de fréquence (Δf2 ; Δf2') qui ne s'annule pas.

11. Système de transmission optique (1000 ; 1000a) selon la revendication 10, dans lequel ledit premier émetteur-récepteur optique (100a) est configuré pour fournir un premier signal optique de sortie modulé (s2) avec un premier débit de symboles, et dans lequel ledit deuxième décalage de fréquence (Δf2) se situe entre environ 40 pour cent d'un débit de symboles dudit premier signal optique de sortie modulé (s2) et environ 65 pour cent dudit débit de symboles dudit premier signal optique de sortie modulé (s2).

12. Procédé de fonctionnement d'un système de transmission optique (1000 ; 1000a) comprenant au moins deux émetteurs-récepteurs (100a, 100b) optiques selon l'une des revendications 1 à 8, ledit procédé comprenant les étapes suivantes : fournir (300), au moyen d'une source laser (131) d'un premier émetteur-récepteur (100a) desdits au moins deux émetteurs-récepteurs (100a, 100b), un premier signal optique (s01) à ladite première fréquence (f1 ; f11), fournir (310), au moyen d'une source laser (132) d'un deuxième émetteur-récepteur (100b) desdits au moins deux émetteurs-récepteurs (100a, 100b), un deuxième signal optique (s02) à une deuxième fréquence (f2 ; f21), qui est décalée par rapport à ladite première fréquence (f1) d'un deuxième décalage de fréquence (Δf2 ; Δf2') qui ne s'annule pas.

13. Procédé selon la revendication 12, ledit procédé comprenant en outre les étapes suivantes : fournir (322a), au moyen d'une source laser (131) dudit premier émetteur-récepteur optique (100a), un premier signal porteur optique (s1) et un premier signal d'oscillateur local (s6), fournir (322b), au moyen d'une source laser (132) dudit deuxième émetteur-récepteur optique (100b), un deuxième signal porteur optique (s4) et un deuxième signal d'oscillateur local (s3).

14. Procédé selon l'une des revendications 12 et 13, ledit procédé comprenant en outre les étapes suivantes : moduler (324a), au moyen d'un modulateur optique (112) dudit premier émetteur-récepteur optique (100a), ledit premier signal porteur optique (s1) avec un premier débit de symboles, pour obtenir un premier signal optique de sortie modulé (s2), et moduler (324b), au moyen d'un modulateur optique (112) dudit deuxième émetteur-récepteur optique (100b), ledit deuxième signal porteur optique (s4) avec un deuxième débit de symboles, pour obtenir un deuxième signal optique de sortie modulé (s5).

15. Procédé selon la revendication 14, ledit procédé comprenant en outre les étapes suivantes : transmettre (326a) ledit premier signal optique de sortie modulé (s2) à un récepteur optique (120) dudit deuxième émetteur-récepteur (100b), et transmettre (326b) ledit deuxième signal optique de sortie (s5) modulé à un récepteur optique (120) dudit premier émetteur-récepteur (100a).

16. Procédé selon la revendication 13, ledit procédé comprenant en outre les étapes suivantes : recevoir et traiter (328a) ledit premier signal optique de sortie modulé (s2) au niveau du récepteur (120) dudit deuxième émetteur-récepteur (100b), et recevoir et traiter (328b) ledit deuxième modulé signal optique de sortie (s5) au niveau du récepteur (120) dudit premier émetteur-récepteur (100a).

**Fig. 1**

**Fig. 2**

EP 3 382 910 B1

# Fig. 3A

# Fig. 3B

# Fig. 3C

**Fig. 4**

EP 3 382 910 B1

Fig. 5

EP 3 382 910 B1

## Fig. 6A

200

210

220, 222

## Fig. 6B

250

252

254

256

## Fig. 7A

300

310

320

## Fig. 7B

322a

322b

324a

324b

326a

326b

328a

328b

Fig. 8

**Fig. 9A**

$M(f-f_{TX})$

0    $f_{TX}$    f

**Fig. 9B**

$LO_{RX}$    $M1(f-f_{TX})$

0    $f_{RX}$  $f_{TX}$    f

**Fig. 9C**

DC    FM

LSB    RSB

0    $f_{int}$    f

**Fig. 9D**

RSB

0    $f_{int}$    f

**Fig. 9E**

RSB'

0    f

# Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7209664 B1

**Non-patent literature cited in the description**

- **ANTONIO MECOZZI ; CRISTIAN ANTONELLI ; MARK SHTAIF.** Kramers-Kronig coherent receiver. *Optica,* 2016, vol. 3.11, 1220-1227

- **VOELCKER, H.** Demodulation of Single-Sideband Signals via Envelope Detection. *IEEE Transactions on Communication Technology,* February 1966, vol. COM-14, 22-30
- Envelope Detection of "Full Carrier" SSB" to "Implementation of ASSB. 24-27